(19) Europäisches Patentamt
European Patent Office
Office européen des brevets

(11) **EP 2 401 830 B1**

(12) # FASCICULE DE BREVET EUROPEEN

(45) Date de publication et mention
de la délivrance du brevet:
**17.07.2013 Bulletin 2013/29**

(21) Numéro de dépôt: **10705386.0**

(22) Date de dépôt: **26.02.2010**

(51) Int Cl.:
**H04L 5/00** (2006.01)     **H04W 72/06** (2009.01)
**H04L 1/00** (2006.01)     **H04L 1/20** (2006.01)
**H04L 27/26** (2006.01)

(86) Numéro de dépôt international:
**PCT/EP2010/052458**

(87) Numéro de publication internationale:
**WO 2010/097455 (02.09.2010 Gazette 2010/35)**

(54) **MÉTHODE DE SIGNALISATION DE LA QUALITÉ D'UN CANAL DE TRANSMISSION**

VERFAHREN ZUM SIGNALISIEREN DER QUALITÄT EINES ÜBERTRAGUNGSKANALS

METHOD FOR SIGNALLING THE QUALITY OF A TRANSMISSION CHANNEL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.02.2009 FR 0951278**

(43) Date de publication de la demande:
**04.01.2012 Bulletin 2012/01**

(73) Titulaire: **Commissariat à l'Énergie Atomique et aux Énergies Alternatives 75015 Paris (FR)**

(72) Inventeurs:
• **KTENAS, Dimitri**
**F-38600 Fontaine (FR)**
• **CALVANESE STRINATI, Emilio**
**F-38000 Grenoble (FR)**

(74) Mandataire: **Ilgart, Jean-Christophe et al BREVALEX 95 rue d'Amsterdam 75378 Paris Cedex 8 (FR)**

(56) Documents cités:
EP-A- 1 901 573     EP-A- 1 906 577
WO-A-2008/109269

• NA WEI ET AL: "Mitigating Signaling Requirements For MIMO with Frequency Domain Packet Scheduling" VEHICULAR TECHNOLOGY CONFERENCE, 2007. VTC2007-SPRING. IEEE 65TH, IEEE, PI, 1 avril 2007 (2007-04-01), pages 2771-2775, XP031093135 ISBN: 978-1-4244-0266-3

• TEXAS INSTRUMENTS: "CQI Feedback Reduction Scheme for E-UTRA" 3GPP DRAFT; R1-072853 TI CQI FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Orlando, USA; 20070625, 20 juin 2007 (2007-06-20), XP050106533

• MCKAY M R ET AL: "Accurate Approximations for the Capacity Distribution of OFDM-Based Spatial Multiplexing", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 5377-5382, XP031126523, ISBN: 978-1-4244-0353-0

• MATTHEW R MCKAY ET AL: "On the Mutual Information Distribution of OFDM-Based Spatial Multiplexing: Exact Variance and Outage Approximation", IEEE TRANSACTIONS ON INFORMATION THEORY, IEEE PRESS, USA, vol. 54, no. 7, 1 July 2008 (2008-07-01), pages 3260-3278, XP011216548, ISSN: 0018-9448

• ANTTI TOLLI ET AL: "Compensation of non-reciprocal interference in adaptive MIMO-OFDM cellular systems", IEEE TRANSACTIONS ON WIRELESS COMMUNICATIONS, IEEE SERVICE CENTER, PISCATAWAY, NJ, US, vol. 6, no. 2, 1 February 2007 (2007-02-01), pages 545-555, XP011165484, ISSN: 1536-1276, DOI: 10.1109/TWC.2007.05240

**Description**

**DOMAINE TECHNIQUE**

La présente invention concerne de manière générale le domaine des systèmes de télécommunication sans fil et plus particulièrement ceux faisant appel à une adaptation de liaison.

**ÉTAT DE LA TECHNIQUE ANTÉRIEURE**

Dans un système de télécommunication sans fil, la qualité du signal reçu par un terminal dépend d'un grand nombre de facteurs. Afin de maximiser le débit de transmission et la capacité globale du système, les caractéristiques du signal à transmettre peuvent être modifiées pour tenir compte des variations de la qualité du canal de transmission. Ce mécanisme de modification est connu sous la dénomination d'adaptation de liaison (*Link Adaptation*).

Un moyen bien connu pour adapter une liaison dans un système de télécommunication sans fil est d'utiliser une modulation et un codage adaptatifs ou AMC (*Adaptive Modulation and Coding*) autrement dit de sélectionner un schéma de codage et de modulation, MCS (*Modulation and Coding Scheme*) en fonction de la qualité du canal. Ce moyen est notamment mis en oeuvre dans la couche physique des systèmes 3GPP HSxPA et ETSI HIPERLAN/2. Typiquement, pour un faible rapport signal à bruit sur le canal de transmission, on opte pour un code à faible rendement (c'est-à-dire à taux de redondance élevé) et/ou à faible degré de modulation (c'est-à-dire une constellation de faible taille). A l'inverse, si le canal de transmission présente un rapport signal à bruit élevé, le débit est maximisé en choisissant un code à fort rendement et un degré de modulation élevé. Le rapport signal à bruit SNR (pour *Signal to Noise Ratio*) ou signal à interférence plus bruit, SINR (pour *Signal to Interference plus Noise Ratio*) est généralement estimé par le récepteur à l'aide de symboles pilote et d'une estimation des coefficients de propagation du canal.

Un second moyen d'adaptation d'une liaison sans fil, permettant de combattre les évanouissements (*channel fading*) sur le canal de transmission, est de recourir à un mécanisme de requête de retransmission hybride ou HARQ (*Hybrid Automatic Repeat reQuest*) : si le récepteur reçoit un paquet erroné, un accusé de réception négatif est retourné à l'émetteur et le paquet est retransmis. Il existe différents types de protocole HARQ, selon notamment que le paquet est retransmis à l'identique ou que des bits de parité supplémentaires sont seulement transmis (redondance incrémentale).

Le schéma d'adaptation AMC au niveau de la couche physique peut être combiné avec un mécanisme HARQ au niveau de la couche de liaison (*data link layer*). On parle alors de mécanisme d'adaptation inter-couche (*cross-layer design).* Dans un tel cas, une première adaptation est effectuée au niveau de la couche physique grâce au choix du schéma MCS en fonction du SINR mesuré par le récepteur pour atteindre un taux d'erreur cible donné. Une seconde adaptation, plus fine, est réalisée au niveau de la couche de liaison par l'envoi de requêtes de retransmission. L'architecture inter-couche permet de réduire le nombre de schémas MCS du mécanisme d'adaptation AMC. On trouvera un exemple d'adaptation inter-couche dans l'article de E. Calvanese Strinati et al. intitulé « Performance evaluation of some hybrid ARQ schemes in IEEE 802.11a networks » publié dans Proceedings of the IEEE Vehicular Technology Conference, Spring, vol. 4, pages 2735-2739, avril 2003.

Dans un système de télécommunication multi-accès, l'adaptation de la liaison intervient après que des ressources de transmission aient été allouées à l'utilisateur. Celles-ci peuvent être des intervalles de transmission, des fréquences de transmission, des codes d'accès voire une combinaison de telles ressources. L'allocation de ressources, encore dénommée ordonnancement (*scheduling*) permet aux utilisateurs, et plus généralement aux services requérant une qualité de service plus élevée, de bénéficier des canaux de transmission de meilleure qualité.

Par exemple, pour un système de transmission sans fil de type OFDMA *(Orthogonal Frequency Division Multi-Access*), on peut utiliser les méthodes d'ordonnancement MCI (*Max C/I per chunk scheduling*), PF (*Proportional Fair per chunk scheduling*) ou EDF (*Earliest Deadline First scheduling*) pour allouer dynamiquement des intervalles de fréquence (*chunks*) aux différents utilisateurs. La méthode MCI vise à maximiser le débit total de transmission, indépendamment des contraintes de qualité de service des différents utilisateurs, en attribuant un intervalle de fréquence à l'utilisateur pouvant atteindre le plus haut débit instantané sur cet intervalle. La méthode PF attribue un intervalle de fréquence à l'utilisateur atteignant le rapport de débit instantané / débit moyen le plus élevé sur cet intervalle. La méthode EDF donne la priorité aux flux temps réel en allouant les intervalles de fréquence en priorité aux paquets ayant les plus faibles valeurs de TTL (*Time To Live*) résiduel, indépendamment des débits que peuvent atteindre les utilisateurs.

Une fois les intervalles de fréquence alloués aux différents utilisateurs, chaque liaison utilisateur peut être adaptée en choisissant le schéma de modulation et de codage le plus approprié au canal de transmission de l'utilisateur.

De manière générale, l'allocation de ressources de transmission à un utilisateur et l'adaptation de sa liaison descendante requièrent le retour sur sa liaison montante d'un indicateur de qualité de canal ou CQI (*Channel Quality Indicator*).

En pratique, dans un système OFDMA, l'indicateur CQI est déterminé de la manière suivante :

Dans une première étape, l'émetteur transmet sur la liaison descendante, un ensemble de symboles pilote sur les différentes sous-porteuses du multiplex OFDM.

La bande du multiplex OFDM est divisée en intervalles de fréquence consécutifs $PRB_k$, $k = 1,...,K$.

Dans une seconde étape, on calcule au niveau du récepteur, pour chaque intervalle $PRB_k$, $k = 1,...,K$ ou de manière plus générale, pour chaque sous-bande constituée de $N_{SB}$ intervalles adjacents où $N_{SB}$ est un diviseur de $K$, $1 \leq N_{SB} < K$, le rapport signal à interférence plus bruit **$SINR(k)$**. Le rapport **$SINR(k)$** est calculé à partir de la puissance des symboles pilote reçus et de la puissance de bruit plus interférence sommées sur les **$n_c$** sous-porteuses de la sous-bande et sur le nombre **$n_t$** de symboles OFDM pendant lesquels ils sont transmis, à savoir :

$$SINR(k) = \frac{1}{n_t n_c} \sum_{j=1}^{n_t} \sum_{i=1}^{n_c} \gamma_{ij} \qquad (1)$$

où $\gamma_{ij} = \dfrac{|h_{ij}|^2}{\sigma^2}$ est le rapport signal à interférence plus bruit par sous-porteuse relatif au symbole OFDM **$j$**, **$h_{ij}$** est le coefficient d'atténuation complexe relatif à la sous-porteuse $i = 1,..,n_c$ du symbole OFDM $j = 1,..,n_t$ et où $\sigma^2$ est égal à la puissance de bruit plus interférence par sous-porteuse. On a noté **$n_c$** le nombre de porteuses dans la sous-bande considérée et $n_t$ le nombre de symboles OFDM consécutifs sur lesquels on effectue la mesure.

Dans une troisième étape, on convertit les rapports $SINR(k)$, $k = 1,...,K/N_{SB}$, en un indicateur de qualité de canal. L'indicateur de qualité **$CQI$** peut être considéré comme un vecteur de taille $K/N_{SB}$ dont les composantes **$CQI(k)$** indiquent la qualité de transmission dans les différentes sous-bandes, par exemple :

$$CQI(k) = C.floor\left(\frac{SINR(k)}{C} + 0.5\right) \qquad (2)$$

où **$C$** est le pas de quantification de l'indicateur de qualité, **$SINR(k)$** est exprimé en dB et **$floor(x)$** est la fonction qui donne la valeur entière de **$x$**.

Alternativement, chaque composante **$CQI(k)$** donne l'indice de la constellation MCS permettant d'assurer un taux d'erreur paquet cible, **$PER_{tg}$** sur la liaison descendante, compte tenu du rapport **$SINR(k)$** dans la sous-bande considérée. On supposera dans la suite que l'indice de la constellation est d'autant plus faible qu'elle est robuste au bruit.

Enfin, dans une quatrième étape, on transmet sur la liaison montante l'indicateur de qualité du canal selon une méthode de signalisation (*CQI reporting scheme*). La méthode de signalisation exhaustive consiste à transmettre toutes les composantes $CQI(k)$ de l'indicateur. Toutefois, étant donné que le rapport doit être envoyé fréquemment pour suivre les variations rapides du canal en téléphonie mobile, des méthodes de signalisation abrégée ont été proposées. On en trouvera notamment une description dans l'article dé N. Kolehmainen et al. intitulé « Channel quality indication reporting schemes for UTRAN long term evolution downlink » publié dans Proceedings of IEEE VTC Spring 2008, Singapore, May 2008, pages 2522-2526.

Une première méthode de signalisation abrégée, connue sous le nom de « *Top-M individual reporting scheme* », consiste à transmettre seulement les **$M < K/N_{SB}$** composantes **$CQI(k)$** de l'indicateur ayant les valeurs les plus élevées, les **$K/N_{SB} - M$** composantes restantes étant transmises collectivement sous la forme d'une simple moyenne. Autrement dit, seules les composantes relatives aux **$M < K/N_{SB}$** meilleurs intervalles de fréquence sont transmises de manière individuelle, les autres étant moyennées. Dans ce cas, l'indicateur de qualité peut être codé avec le nombre de bits suivant :

$$R_1 = \log_2\left(C_{\frac{K}{N_{SB}}}^M\right) + L(M+1) \qquad (3)$$

où $C_{\frac{K}{N_{SB}}}^{M}$ est le nombre de combinaisons de $M$ parmi $\frac{K}{N_{SB}}$ et $L$ est la dynamique autorisée pour les valeurs **CQI(k).**

Le premier terme correspond aux positions possibles des sous-bandes parmi les $K/N_{SB}$ sous-bandes possibles et le second terme au nombre de bits nécessaire au codage des composantes individuelles et de la moyenne des composantes restantes.

Une seconde méthode de signalisation abrégée, connue sous le nom de « *Top-M average reporting scheme* », consiste à transmettre les $M$ composantes les plus élevées sous la forme d'une première moyenne et les $K/N_{SB}$ - $M$ composantes restantes sous la forme d'une seconde moyenne. Dans ce cas, l'indicateur de qualité peut être codé avec le nombre de bits suivant :

$$R_1 = 2L + \log_2 \left( C_{\frac{K}{N_{SB}}}^{M} \right) \qquad\qquad (4)$$

Une troisième méthode de signalisation abrégée, connue sous le nom de « *Threshold based reporting scheme* » consiste à sélectionner les composantes **CQI(k)** telles que :

$$CQI(k) > CQI_{max} - \eta \qquad\qquad (5)$$

où $CQI_{max} = \max_{k} CQI(k)$ est la valeur de la composante la plus élevée et q est une valeur de seuil prédéterminée (en dB). Les composantes ainsi sélectionnées sont moyennées pour fournir une première valeur moyenne, et les composantes restantes sont moyennées à leur tour pour fournir une seconde valeur moyenne. L'indicateur de qualité, constitué par ces deux valeurs moyennes ainsi que par la position des sous-bandes associées aux composantes ainsi sélectionnées, nécessite un nombre de bits qui dépend notamment de la valeur de seuil.

Quel que soit le schéma retenu, la transmission de l'indicateur de qualité du canal grève la bande passante de la liaison montante, et ce d'autant que la périodicité de cette transmission doit être courte pour suivre les variations de qualité du canal.

Le document WO2008/109269 décrit une méthode d'allocation de ressources et d'adaptation de liaison pour différents utilisateurs. Le document en question prévoit également une signalisation de la qualité de canal d'un utilisateur (CQI) par groupe de ressources. Les documents EP1906577, EP1901573 ainsi que le document IEEE "Mitigating signaling requirements for MIMO with Frequency Domain Packet Scheduling", from NaWei, présenté pendant la conférence VTC 2007, décrivent des méthodes similaires.

Un premier objet de la présente invention est par conséquent de proposer une méthode de signalisation de la qualité d'un canal qui pénalise moins la bande passante de la liaison montante que dans l'état de la technique.

Un second objet de la présente invention est de permettre une transmission d'un indicateur de qualité du canal avec une dynamique plus élevée sans accroître pour autant l'occupation de la bande passante de la liaison montante.

Un premier objet subsidiaire de la présente invention est de permettre une transmission sur la liaison descendante avec un taux d'erreur paquet et une latence plus faibles que dans un système de télécommunication multi-accès de l'art antérieur.

Un second objet subsidiaire de la présente invention est de réduire le nombre moyen de retransmissions d'un paquet dans un système HARQ et corrélativement d'augmenter le débit de transmission moyen (throughput) sur les liaisons descendantes des utilisateurs.

## EXPOSÉ DE L'INVENTION

La présente invention est définie par une méthode de signalisation de la qualité de canal d'un utilisateur dans un système de télécommunication sans fil à adaptation de liaison, ledit canal étant non ergodique et à evanouissements par blocs et le système disposant d'une pluralité de groupes de ressources de transmission, Les ressources de transmission étant des intervalles de fréquence du multiplex OFDM, chaque groupe comprenant au moins une ressource de transmission. On détermine pour chaque groupe de ressources, si celui-ci serait en situation de coupure pour un débit de consigne de l'utilisateur, un groupe étant considéré en situation de coupure si l'information mutuelle instantanée sur ce groupe de ressources est inférieure audit débit binaire de consigne et l'on transmet sur la liaison montante de l'utilisateur, une liste d'identifiants des groupes de ressources qui seraient en situation de coupure ainsi qu'un indicateur de qualité de canal pour les groupes de ressources qui n'y seraient pas.

L'information mutuelle instantanée est calculée comme une moyenne de l'information mutuelle prise sur l'ensemble des sous-porteuses dudit groupe et sur l'ensemble des temps-symboles d'un bloc.

Le débit binaire de consigne pour un groupe de ressources est lui-même avantageusement déduit d'un schéma de modulation et de codage apte à satisfaire un taux d'erreur paquet de consigne en présence du rapport signal sur interférence plus bruit estimé pour ce groupe de ressources.

Alternativement, le débit binaire de consigne pour un groupe de ressources est avantageusement déduit d'un schéma de modulation et de codage, ledit schéma et le rapport signal sur interférence plus bruit étant déterminés conjointement de manière à satisfaire un taux d'erreur paquet de consigne.

On détermine de préférence le temps de cohérence du canal, et la liste des identifiants des groupes de ressources en situation de coupure est transmise sur la voie montante avec une période supérieure ou égale audit temps de cohérence.

Selon une première variante de signalisation, on estime le rapport signal sur interférence plus bruit pour chaque groupe de ressources, et l'indicateur de qualité de canal comprend des valeurs quantifiées des rapports signal sur interférence plus bruit relatifs aux groupes de ressources qui ne sont pas en situation de coupure.

Selon une seconde variante de signalisation, on estime le rapport signal sur interférence plus bruit pour chaque groupe de ressources, on effectue une quantification desdits rapports, les rapports quantifiés relatifs aux groupes de ressources n'étant pas en situation de coupure étant classés en fonction de leurs valeurs, l'indicateur de qualité de canal comprenant un nombre prédéterminé des rapports quantifiés ayant les valeurs les plus élevées ainsi qu'une moyenne des valeurs restantes.

Selon une troisième variante de signalisation, on estime le rapport signal sur interférence plus bruit pour chaque groupe de ressources, on effectue une quantification desdits rapports, les rapports quantifiés relatifs aux groupes de ressources n'étant pas en situation de coupure étant classés en fonction de leurs valeurs, l'indicateur de qualité de canal comprenant une première moyenne calculée sur un nombre prédéterminé des valeurs les plus élevées et une seconde moyenne calculée sur les valeurs restantes.

Selon une quatrième variante de signalisation, on estime le rapport signal sur interférence plus bruit pour chaque groupe de ressources, on effectue une quantification desdits rapports, les rapports quantifiés relatifs aux groupes de ressources n'étant pas en situation de coupure étant classés en fonction de leurs valeurs, et l'on calcule une première moyenne sur les valeurs comprises dans un intervalle dont la borne supérieure est la valeur la plus élevée et la borne inférieure est cette même valeur moins une marge prédéterminée, puis l'on calcule une seconde moyenne sur les valeurs restantes, l'indicateur de qualité de canal comprenant lesdites première et seconde moyennes.

Avantageusement, lorsque l'émetteur sur ledit canal reçoit via la liaison montante de l'utilisateur les identifiants des groupes de ressources en situation de coupure, il ne transmet pas sur ces groupes de ressources pendant un temps supérieur ou égal au temps de cohérence du canal.

Alternativement, lorsque l'émetteur sur ledit canal reçoit via la liaison montante de l'utilisateur les identifiants de groupes de ressources en situation de coupure, il ne transmet pas sur ces ressources pendant un temps supérieur ou égal à une période d'ordonnancement des ressources du système.

La méthode de signalisation selon l'invention peut être typiquement implémentée dans un système de télécommunication OFDM. Les ressources de transmission sont alors des intervalles de fréquences du multiplex OFDM.

L'information mutuelle instantanée d'un intervalle de fréquence est obtenue alors comme une moyenne des informations mutuelles sur les sous-porteuses dudit intervalle.

Si le système de télécommunication est un système de télécommunication par paquets à transmission incrémentale de redondance, l'information mutuelle instantanée issue de deux transmissions successives d'un intervalle de fréquence peut être obtenue comme le double de la moyenne des informations mutuelles sur les sous-porteuses dudit intervalle.

Lorsque le système de télécommunication est un système de transmission par paquets de type HARQ, dans lequel un paquet est retransmis à l'identique si le paquet reçu est erroné, deux paquets issus des deux transmissions successives étant combinés, l'information mutuelle instantanée d'un intervalle de fréquence peut être alors estimée comme la moyenne des informations mutuelles sur les sous-porteuses dudit intervalle, dans lesquelles la puissance de bruit est divisée par 2 par rapport à une transmission simple.

## BRÈVE DESCRIPTION DES DESSINS

D'autres caractéristiques et avantages de l'invention apparaîtront à la lecture de modes de réalisation préférentiels de l'invention en référence aux figures jointes parmi lesquelles :

La Fig. 1 illustre le principe de la méthode de signalisation de la qualité d'un canal selon l'invention ;

La Fig. 2A illustre de manière schématique une méthode de signalisation de la qualité de canal selon un premier mode de réalisation de l'invention ;

La Fig. 2B illustre de manière schématique une méthode de signalisation de qualité de canal selon une variante du premier mode de réalisation ;

La Fig. 2C représente différentes courbes de taux d'erreur paquet pour différents schémas de modulation et de codage ;

La Fig. 3 illustre de manière schématique une méthode de signalisation de la qualité de canal selon un second mode de réalisation de l'invention.

## EXPOSÉ DÉTAILLÉ DE MODES DE RÉALISATION PARTICULIERS

Nous considérerons de manière générale un système de télécommunication sans fil à adaptation de liaison. Chaque utilisateur peut disposer d'une pluralité de ressources de transmission par exemple des intervalles de temps, des intervalles de fréquence, des codes ou une combinaison des ressources précitées. Ces ressources lui sont allouées par une méthode d'ordonnancement si le système est multi-accès et, dans ce cas, l'ordonnancement peut également utiliser l'indicateur de qualité pour procéder à l'allocation de ressources à un utilisateur.

Le système de communication peut être fixe ou mobile mais dans tous les cas les caractéristiques des canaux des différents utilisateurs sont susceptibles de varier au cours du temps.

L'idée à la base de l'invention est de prédire au niveau du récepteur une situation de coupure au sens de la théorie de l'information. Si une ressource de transmission est affectée par une situation de coupure, cette situation sera signalée à l'émetteur en lieu et place de l'indication de qualité de cette ressource. Ainsi, il sera généralement possible de réduire le nombre de bits de l'indicateur de canal et par conséquent le trafic de signalisation sur la liaison montante.

De surcroît, comme nous le verrons plus loin, la composante de l'indicateur de qualité relative à la ressource en situation de coupure n'aura pas besoin d'être retransmise avant un temps prédéterminé. La ressource en situation de coupure pourra être interdite d'accès pour cet utilisateur pendant ce même laps de temps et l'on évitera ainsi une transmission inutile sur cette ressource. De manière similaire, dans un système à retransmission de paquets, des retransmissions inutiles pourront être évitées dès lors qu'une ressource en situation de coupure sera signalée à l'émetteur, d'où une diminution du taux d'erreur paquet, et, en cas d'allocation d'une nouvelle ressource à l'utilisateur pendant le temps de coupure, une réduction de la latence sur la liaison descendante.

A titre d'exemple et non de limitation nous supposerons dans la suite que le système de télécommunication est un système OFDM, c'est-à-dire que les signaux transmis aux utilisateurs sont des signaux OFDM. Chaque utilisateur peut se voir allouer un intervalle ou plusieurs intervalles de fréquence, chaque intervalle étant constitué d'un ensemble de sous-porteuses contiguës (*frequency chunks*), pendant plusieurs temps-symbole OFDM pour transmettre un paquet de données.

Le canal de l'utilisateur est un canal radio. En général un canal radio n'est pas ergodique mais peut être modélisé sous la forme d'un canal à évanouissements par blocs (*block fading channel*). Dans le cas d'une transmission radio de type OFDM, un bloc pourra être défini par un intervalle temporel et un ensemble de sous-porteuses contiguës. A chaque bloc correspond une instance du canal généralement caractérisée par la valeur complexe d'un coefficient d'atténuation. Les coefficients d'atténuation des différents blocs peuvent être considérés comme les résultats de tirages d'une variable aléatoire.

La capacité au sens de Shannon, exprimée comme moyenne de l'information mutuelle sur toutes les instances du canal, n'est pas une grandeur pertinente pour caractériser un canal non ergodique. Comme exposé dans l'article d'E. Biglieri et al. intitulé « Fading channels : information-theoretic and communication aspects » publié dans IEEE Trans. on Information Theory, vol. 44, n° 6, Oct. 1998, pages 2619-2692, il est alors préférable de caractériser ce canal par une probabilité de coupure (*outage probability*). Il y a coupure lorsque la capacité associée à l'instance du canal est inférieure au taux de transmission binaire de la source.

La probabilité de coupure dépend du rapport signal à bruit $\gamma$ et du taux binaire de transmission $R$ de la source, soit :

$$P_{out}(\gamma, R) = \Pr(I(X,Y) < R) \qquad (6)$$

La probabilité de coupure peut être considérée comme la probabilité que l'information mutuelle « instantanée » du canal, vue par un paquet, soit inférieure au taux binaire de transmission. Si celle-ci est inférieure à ce taux, il ne sera pas possible de corriger les erreurs affectant un paquet. En revanche, en faisant un parallèle avec le théorème fondamental de Shannon, dès lors que l'information mutuelle « instantanée » du canal est supérieure à ce taux, il sera toujours possible d'utiliser un code correcteur permettant de transmettre les données avec une probabilité d'erreur arbitrairement faible.

Si l'on considère à nouveau le cas du système OFDM précité et plus particulièrement du canal de transmission d'un utilisateur associé à un ensemble de $n_c$ sous-porteuses et un ensemble de $n_t$ temps-symbole OFDM pendant un intervalle de transmission, l'information mutuelle « instantanée » du canal, c'est-à-dire, « observée » lors de la transmission du paquet, peut être évaluée au moyen de :

$$I_{inst} = \frac{1}{n_t n_c} \sum_{j=1}^{n_t} \sum_{i=1}^{n_c} I_{ij} \qquad (7)$$

où $I_{iii}$ est l'information mutuelle moyenne (au sens où elle est moyennée sur les différents symboles de modulation possibles) relative à la sous-porteuse $i$ et au $j^{\text{ème}}$ temps symbole OFDM. Le comportement du canal sur une sous-porteuse peut être considéré, au coefficient d'atténuation complexe près, comme étant de type BBAG (c'est-à-dire à Bruit Blanc Additif Gaussien).

On suppose que les symboles d'un paquet de données modulant les $n_c$ sous-porteuses appartiennent à un alphabet $Q$-aire. Le récepteur connaît au moyen d'un estimateur de canal les coefficients complexes d'atténuation $h_{ij}$ affectant les différentes sous-porteuses lors de la transmission du $j^{\text{ème}}$ temps symbole OFDM. Généralement, l'estimateur de canal effectue une estimation de certains coefficients complexes d'atténuation en différents instants de l'intervalle de transmission et pour différentes sous-porteuses, les autres coefficients étant déterminés par interpolation temporelle et/ou fréquentielle.

L'estimateur de canal peut classiquement utiliser la détection de symboles pilotes distribués sur les sous-porteuses dans la trame de symboles OFDM. Alternativement, l'estimateur de canal peut être du type aidé par décision (decision aided channel estimation) de manière connue en soi.

La détection des symboles pilote permet par ailleurs d'obtenir une estimation de la variance de bruit $\sigma^2$. On peut montrer que l'information mutuelle $I_{ij}$ s'exprime alors par :

$$I_{ij} = \log_2 Q - \frac{1}{Q} \sum_{k=1}^{Q} E_z \left\{ \log_2 \left( \sum_{q=1}^{Q} \exp \left[ -\frac{\left| h_{ij} a_k + z - h_{ij} a_q \right|^2 - |z|^2}{2\sigma^2} \right] \right) \right\} \qquad (8)$$

où les $a_q = 1,..,Q$ sont les symboles de l'alphabet de modulation modulant les sous-porteuses pendant le temps symbole OFDM considéré, $z = N(0,\sigma^2)$ est la variable aléatoire décrivant le bruit sur la sous-porteuse et $E_z(.)$ est l'espérance sur les échantillons de bruit.

Lorsque la liaison de l'utilisateur utilise un mécanisme de retransmission de paquet de type HARQ et une combinaison des paquets reçus à chaque tentative de transmission (Chase combining), on peut alors montrer que l'information mutuelle instantanée prenant en compte la future retransmission du paquet sur le même ensemble de sous-porteuses et le même ensemble de temps-symbole OFDM s'exprime par :

$$I_{inst} = \frac{1}{n_t n_c} \sum_{j=1}^{n_t} \sum_{i=1}^{n_c} I'_{ij} \qquad (9-1)$$

avec

$$I'_{ij} = \log_2 Q - \frac{1}{Q}\sum_{k=1}^{Q} E_{z'} \left\{ \log_2\left( \sum_{q=1}^{Q} \exp\left[ -\frac{\left|h_{ij}a_k + z' - h_{ij}a_q\right|^2 - |z'|^2}{\sigma^2} \right] \right) \right\}$$

$$(9-2)$$

où

$$z' = N\left( 0, \frac{\sigma^2}{2} \right).$$

L'homme du métier comprendra que (9-2) se déduit simplement de (8) en divisant la puissance de bruit par 2, autrement dit, toutes choses étant égales par ailleurs, en doublant le rapport signal à bruit par sous-porteuse.

De manière similaire, si la liaison de l'utilisateur fait appel à un mécanisme de transmission de paquets à redondance incrémentale, on peut montrer que l'information mutuelle instantanée prenant en compte la transmission ultérieure des bits de parité du paquet sur ce même ensemble de sous-porteuses et le même ensemble de temps-symbole OFDM s'exprime par :

$$I_{inst} = \frac{2}{n_t n_c} \sum_{j=1}^{n_t} \sum_{i=1}^{n_c} I_{ij}$$

$$(10)$$

où $I_{ij}$ est déterminée par l'expression (8).

Il convient de noter que les expressions (9-1) et (10) supposent que le canal de transmission ne varient que faiblement entre la première transmission du paquet et la retransmission suivante.

En tout état de cause, l'utilisateur peut calculer la valeur $I_{inst}$ au moyen d'une table de look-up à partir des valeurs $n_c$, $n_t$, $\sigma^2$ et $|h_{ij}|^2$, $i = 1,...,n_c$, $j = 1,...,n_t$ et la comparer avec le débit binaire **R**. L'utilisateur diagnostiquera une coupure du canal (*outage*) si le débit binaire est supérieur à l'information mutuelle instantanée :

$$R > I_{inst}$$

$$(11)$$

Le multiplex OFDM étant divisé en une pluralité **K** d'intervalles de fréquence (*frequency chunks*), le diagnostic de coupure peut être effectué intervalle par intervalle ou de manière plus grossière selon la granularité de la signalisation de la qualité du canal. On entend par granularité le nombre $N_{SB}$ d'intervalles faisant l'objet d'une signalisation de qualité commune. Le calcul de l'information mutuelle instantanée est alors effectué sur $N_{SB}$ intervalles de fréquence adjacents et le diagnostic de coupure est commun à ces intervalles.

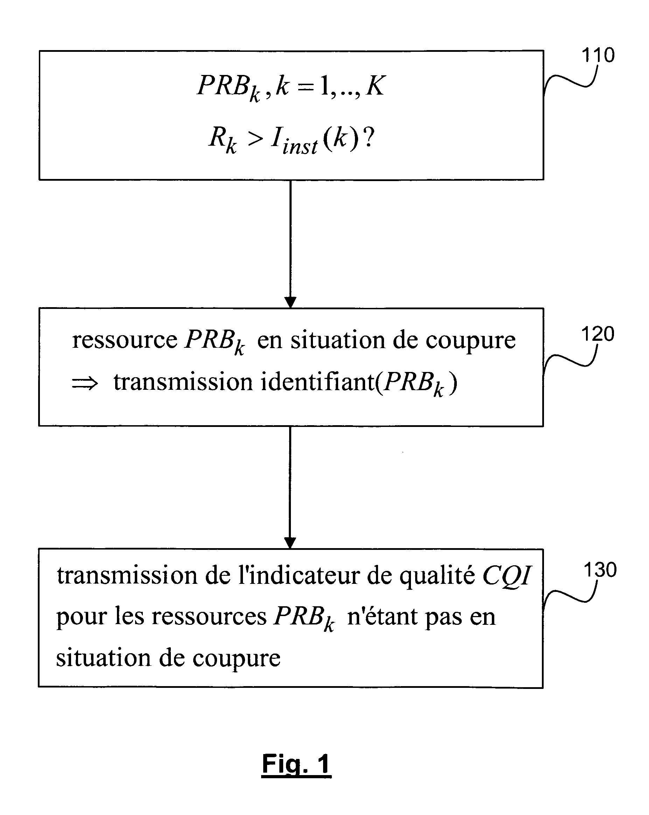

La Fig. 1 illustre le principe de la méthode de signalisation de qualité de canal selon l'invention.

On suppose que le système de télécommunication comprend une pluralité $K$ de ressources de transmission $PRB_1,...PRB_K$, par exemple des intervalles de fréquence d'un multiplex OFDM.

La signalisation de qualité de canal intervient soit préalablement à toute allocation de ressources à l'utilisateur, soit après que des ressources lui aient été allouées. Dans le premier cas, il s'agit de déterminer la qualité des différentes ressources pour décider de leur affectation à l'utilisateur, dans le second cas, il s'agit non seulement de surveiller la qualité des ressources déjà affectées mais aussi de ressources qui pourraient lui être affectées si ces dernières venaient à présenter une qualité insuffisante.

Dans une première étape 110, pour chaque ressource $PRB_k$, $k = 1,...,K$, du système, on détermine si celle-ci serait en état de coupure pour une transmission à un débit binaire requis par l'utilisateur, dénommé également dans la suite « débit binaire de consigne » (ou plus simplement débit de consigne). Pour ce faire, on calcule dans un premier temps l'information mutuelle instantanée $I_{inst}(k)$ de la ressource $PRB_k$ à l'aide de symboles pilote transmis sur cette ressource. On compare ensuite $I_{inst}(k)$ avec le débit binaire $R_k$ requis par l'utilisateur. Par exemple, les débits $R_k$ peuvent être identiques et égaux à un débit correspondant à la qualité de service (QoS) requise par l'utilisateur. Toutefois, les débits $R_k$ peuvent ne pas être identiques pour différents types de flux (voix et données par exemple). Selon une variante non représentée, le diagnostic de coupure peut être effectué sur un groupe de $N_{SB}$ ressources, auquel cas l'information mutuelle instantanée est calculée sur ce groupe de ressources.

On distingue ensuite les ressources de transmission qui seraient en situation de coupure de celles qui n'y seraient pas. Par exemple, à l'étape 120, on transmet sur la liaison montante de l'utilisateur, une liste des identifiants respectifs des ressources de transmission en état de coupure. A l'étape 130, pour les ressources n'étant pas dans cette situation, on transmet sur la liaison montante un indicateur de qualité de canal, de manière conventionnelle, par exemple en utilisant l'une des méthodes de signalisation précitées. La transmission 120 et 130 peut avoir lieu conjointement à l'aide d'un seul rapport ou de deux rapports successifs, l'ordre étant indifférent. En outre, la signalisation peut se faire avec une granularité plus grossière que celle des ressources de transmission : un groupe de $N_{SB}$ ressources ($N_{SB} \geq 1$) peut alors faire l'objet d'un seul et même rapport.

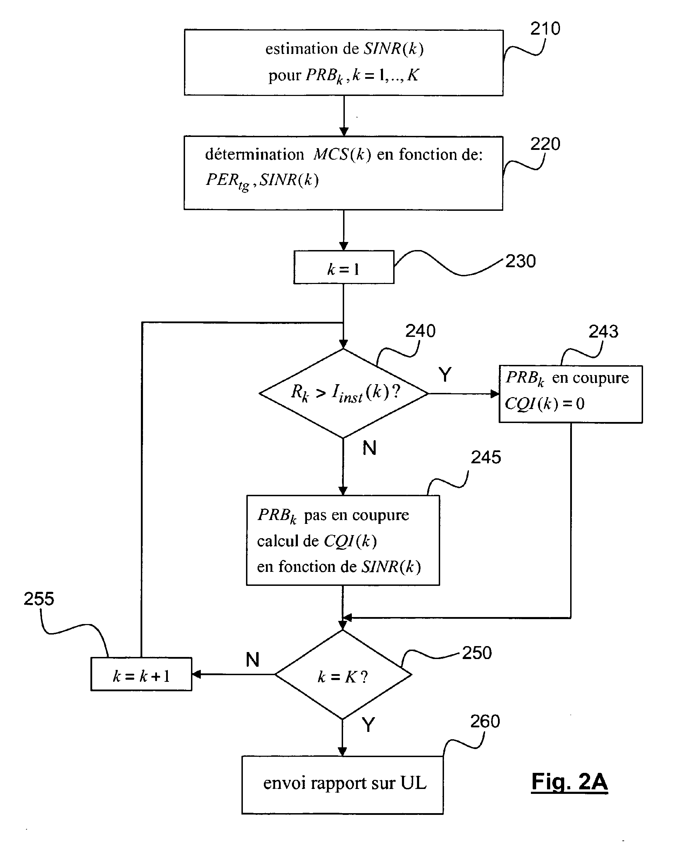

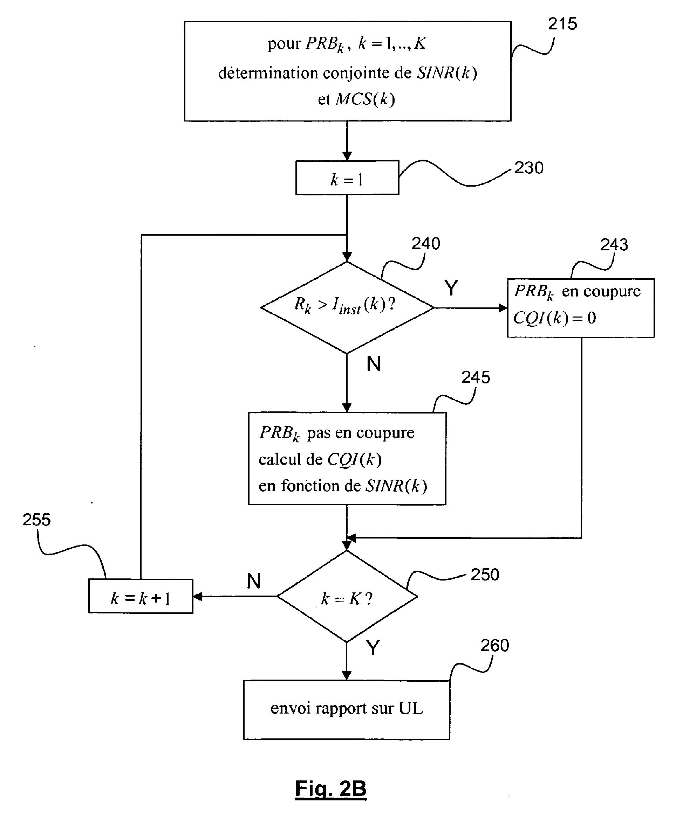

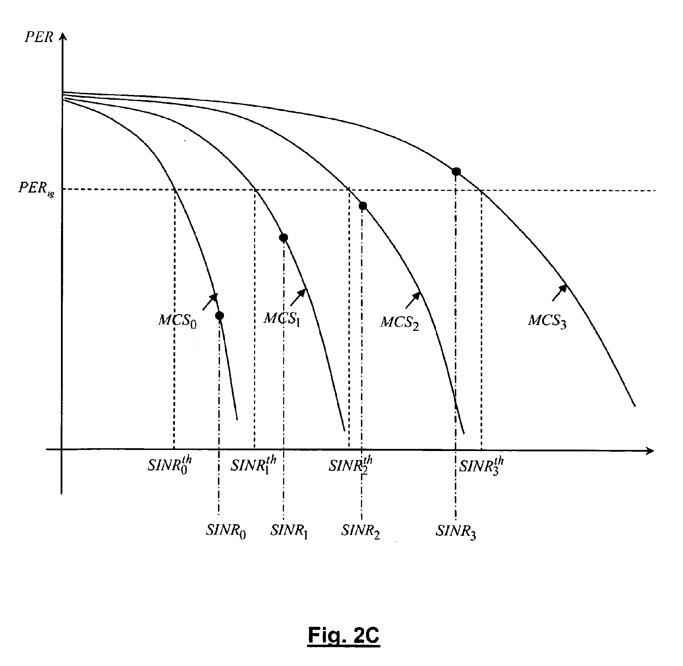

La Fig. 2 illustre schématiquement une méthode de signalisation de la qualité du canal d'un utilisateur selon un premier mode de réalisation de l'invention.

On suppose que le système possède **K** ressources de transmission, c'est-à-dire, pour un système OFDM, de **K** intervalles de fréquence (*frequency chunks*) pour une pluralité de temps-symbole.

A l'étape 210, on estime le rapport signal à interférence plus bruit $SINR(k)$ pour les différentes ressources $PRB_k$, $k = 1,...,K$. Cette estimation est réalisée à l'aide de symboles pilote transmis sur les ressources $PRB_k$.

Le rapport $SINR(k)$ peut être estimé au moyen d'une métrique linéaire comme celle donnée par l'expression (1). Les coefficients d'atténuation $h_{ij}$ sont déterminés par un estimateur de canal et la variance de bruit $\sigma^2$ par le démodulateur, en utilisant des symboles pilote.

Alternativement, le rapport signal sur bruit plus interférence peut être estimé au moyen d'une métrique dite EESM (*Exponential Effective SINR Metric*) telle que décrite par exemple dans le document 3GPP TSG-RAN-1, TR 25.892, Mars 2004, intitulé « Feasability study for OFDM for UTRAN enhancement », soit :

$$SINR(k) = -\beta \ln\left(\frac{1}{n_t n_c} \sum_{j=1}^{n_t} \sum_{i=1}^{n_c} \exp\left(-\frac{\gamma_{ij}}{\beta}\right)\right) \qquad (12)$$

où $\beta$ est un paramètre dépendant uniquement du schéma **MCS** utilisé lors de la mesure, c'est-à-dire celui des symboles pilote transmis et où, on le rappelle, $\gamma_{ij}$ est le rapport signal à interférence plus bruit mesuré par sous-porteuse.

A l'étape 220, on sélectionne, pour chaque ressource de transmission $PRB_k$ un schéma de modulation et de codage, $MCS(k)$, permettant de ne pas excéder un niveau de taux d'erreur paquet prédéterminé $PER_{tg}$, compte tenu du rapport signal à interférence plus bruit mesuré, $SINR(k)$. De préférence, le schéma $MCS(k)$ sera celui de plus fort débit, c'est-à-dire de plus grande efficacité spectrale, respectant la contrainte précitée. Le niveau de consigne $PER_{tg}$ est fonction de la qualité de service requise sur la liaison. On obtient ainsi un vecteur *MCS* de taille **K** dont les composantes sont par exemple des indices identifiant les différents schémas de modulation et de codage ainsi sélectionnés.

A l'étape 230, on initialise le compteur de ressources, soit **k = 1,** puis on entre dans une boucle d'itération.

A l'étape 240, on compare, pour la ressource $PRB_k$, le taux binaire $R_k$, donné par le schéma $MCS(k)$, avec l'information mutuelle instantanée $I_{inst}(k)$ relative à cette même ressource. Cette information mutuelle instantanée peut être évaluée à l'aide de l'expression (7), (9-1) ou (10) suivant le type d'adaptation de liaison considérée. On comprendra que l'évaluation étant effectuée pour la ressource et non pour le canal, la sommation figurant dans ces expressions porte sur l'ensemble de sous-porteuses de la ressource.

En 243, si $R_k > I_{inst}(k)$, la ressource ne peut supporter le débit binaire requis par l'utilisateur. Cette situation de coupure est codée, par exemple au moyen d'une valeur nulle $CQI(k) = 0$.

En 245, si $R_k \leq I_{inst}(k)$, la ressource peut supporter le débit binaire. On détermine alors la composante de l'indicateur de qualité $CQI(k)$ pour cette ressource en fonction du rapport signal sur interférence plus bruit $SINR(k)$. Par exemple, l'indicateur de qualité pourra être obtenu simplement par une quantification de $SINR(k)$ telle que celle donnée par l'expression (2).

En 250, on vérifie si l'on a épuisé l'ensemble des ressources, c'est-à-dire si **k = K.** Dans l'affirmative on passe à l'étape 260, sinon l'on incrémente *k* en 255 et l'on retourne à l'étape 240.

A l'étape 260, on signale la situation de coupure pour les ressources étant dans cet état et on transmet l'indicateur de qualité de canal pour les autres. On notera $M_0$ le nombre de ressources en situation de coupure.

Selon une méthode de signalisation exhaustive, on transmet, pour les ressources n'étant pas en situation de coupure, la valeur calculée à l'étape 245 ou bien directement l'indice du schéma $MCS(k)$ que l'émetteur pourra utiliser pour la transmission. Pour les ressources en situation de coupure, on transmet la liste des identifiants de ces ressources. Par exemple, dans le cas d'un système OFDM, l'identifiant de ressource pourra être la position de l'intervalle de fréquence. Cette liste pourra être précédée d'un attribut commun, par exemple la valeur $CQI(k) = 0$ indiquant l'état de coupure.

Selon une première méthode de signalisation abrégée de type « *Top-M individual reporting* », on classe les $K - M_0$ composantes $CQI(k)$ des ressources n'étant pas en situation de coupure. On sélectionne parmi elles les $M$ composantes ayant les valeurs les plus élevées et l'on transmet ensuite ces composantes de manière individuelle (c'est-à-dire avec leurs identifiants respectifs) à l'émetteur. Alternativement, les indices $MCS(k)$ des schémas de modulation et de codage correspondants sont transmis directement à l'émetteur. Les $K - M - M_0$ ressources restantes n'étant pas en situation de coupure sont codées collectivement sous forme d'une moyenne (arrondie) $\mu_{low}$ de leurs composantes $CQI(k)$ ou bien encore par l'indice du schéma $MCS$ correspondant à cette valeur moyenne. Plus précisément, le schéma $MCS$ est déterminé à partir de la valeur moyenne $\mu_{low}$ selon le même processus qu'à l'étape 220. Enfin les identifiants des $M_0$ ressources en état de coupure sont également codés et transmis à l'émetteur.

Selon une deuxième méthode de signalisation abrégée, de type « *Top - M average reporting* » on procède comme pour la première méthode de signalisation abrégée à la différence près que les $M$ meilleures ressources, en termes de valeurs $CQI(k)$ les plus élevées, sont codées collectivement sous forme de valeur moyenne $\mu_{high}$. Alternativement, elles pourront être codées collectivement par l'indice du schéma $MCS$ correspondant à cette valeur moyenne.

Selon une troisième méthode de signalisation abrégée, de type « *Threshold based reporting* », on sélectionne les ressources n'étant pas en situation de coupure dont les composantes ont des valeurs telles que $CQI(k) > CQI_{max}$

$-\eta$ (en dB) où $CQI_{max} = \max_k CQI(k)$ et $\eta$ est une valeur de seuil. Les composantes ainsi sélectionnées sont transmises sous la forme d'une première valeur moyenne $\mu_{high}$. Les composantes non sélectionnées sont transmises sous la forme d'une seconde valeur moyenne $\mu_{low}$. Alternativement, les indices des schémas $MCS$ correspondant aux valeurs moyennes $\mu_{low}$ et $\mu_{high}$, sont transmis à l'émetteur. Enfin, les identifiants des $M_0$ ressources en état de coupure sont également transmis.

Pour toutes les ressources en état de coupure, il suffira par exemple de transmettre la liste des identifiants des ressources en question précédée d'une indication de coupure $(CQI = 0)$ ou bien encore si ces ressources sont consécutives (par exemple des intervalles de fréquence consécutifs), les identifiants respectifs des première et dernière de ces ressources précédée par ladite indication de coupure. Il ne sera donc pas nécessaire de transmettre pour celles-ci les valeurs quantifiées de $SINR$ sur la voie montante. En outre, la liste des ressources en état de coupure pourra être rafraîchie avec une période supérieure ou égale au temps de cohérence de canal, $T_{coh}$, c'est-à-dire à une fréquence plus faible que celle de la transmission de l'indicateur de qualité du canal. Ainsi, le trafic de signalisation sur la voie montante sera davantage réduit.

Selon une variante du premier mode de réalisation représentée en Fig. 2B, on lieu de déterminer successivement le rapport $SINR(k)$ puis le schéma $MCS(k)$, respectivement en 210 et 220, on détermine conjointement en 215, à partir de l'expression (12), le schéma de modulation et de codage $MCS(k)$ ainsi que le rapport signal à interférence plus bruit $SINR(k)$ compatible avec le niveau de consigne $PER_{tg}$.

On considère ici une ressource $PRB_k$, $k = 1,..,K$

Soit $MCS_0,..., MCS_{N-1}$ les schémas de modulation et de codage rangés par efficacité spectrale croissante (et donc par robustesse au bruit décroissante) et $\beta_0,..., \beta_{N-1}$ les paramètres $\beta$ associés respectivement aux schémas précités.

Pour une consigne $PER_{tg}$ donnée, on peut déterminer pour chaque schéma $MCS_n$, $n = 0,...,N-1$, par exemple au moyen d'une table de « look-up », le rapport signal à interférence plus bruit minimum $SINR_n^{th}$ tel que le taux d'erreur paquet de consigne $PER_{tg}$ soit respecté.

On a représenté en Fig. 2C les courbes de taux d'erreur paquet $PER$ pour différents schémas $MCS_n$. A partir de la valeur de consigne $PER_{tg}$ on peut déduire graphiquement les rapports minimaux $SINR_n^{th}$.

On calcule ensuite à partir des rapports $\gamma_{ij}$ et de l'expression (12), les valeurs :

$$SINR_n = -\beta_n \ln\left(\frac{1}{n_t n_c}\sum_{j=1}^{n_t}\sum_{i=1}^{n_c}\exp\left(-\frac{\gamma_{ij}}{\beta_n}\right)\right) \quad \text{pour} \quad n = 0,..,N-1$$

(13)

et l'on teste pour chacune de ces valeurs si :

$$SINR_n > SINR_n^{th}$$

(14)

On sélectionne alors le schéma $MCS_{n0}$ où $n_0$ est l'indice le plus élevé tel que l'inégalité (14) est bien vérifiée. On a représenté en Fig. 2C les différentes valeurs $SINR_n$ et la valeur $SINR_{n0}$. Dans l'exemple illustré $n_0 = 2$.

Le schéma $MCS(k)$ de la ressource $PRB_k$ est alors donné par $MCS_{n0}$.

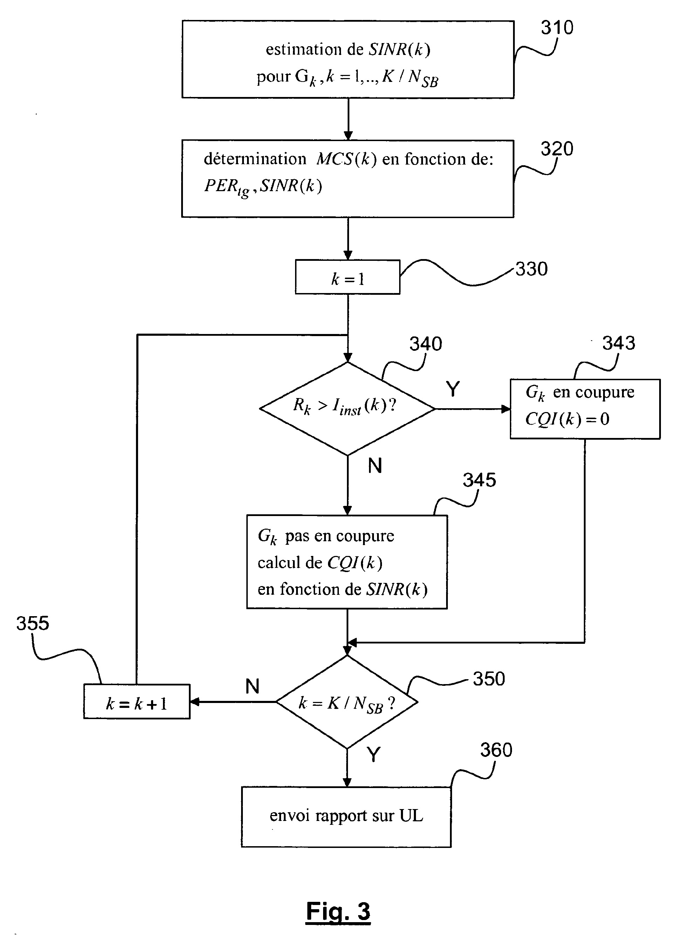

La Fig. 3 illustre schématiquement une méthode de signalisation de la qualité du canal d'un utilisateur selon un second mode de réalisation de l'invention.

Ce second mode de réalisation se distingue du précédent en ce que la signalisation est effectuée par groupe de ressources. On suppose ici que les ressources de transmission sont divisées en groupes, chaque groupe étant constitué de $N_{SB}$ ressources. On notera que le cas particulier où $N_{SB} = 1$ correspond au premier mode de réalisation déjà décrit.

A l'étape 310, on estime le rapport signal à interférence plus bruit $SINR(k)$ pour chaque groupe de ressources $G_k$, $k = 1,...,K/N_{SB}$. Cette estimation est réalisée comme précédemment à partir de symboles pilote, à l'aide d'une métrique linéaire ou bien de type EESM. Les sommations correspondantes dans les expressions (1) et (12) portent alors sur l'ensemble des sous-porteuses du groupe de ressources considéré.

A l'étape 320, on sélectionne, pour chaque groupe $G_k$ un schéma de modulation et de codage, $MCS(k)$, permettant de ne pas excéder un niveau de taux d'erreur paquet prédéterminé $PER_{tg}$, compte tenu du rapport signal à interférence plus bruit mesuré, $SINR(k)$.

A l'étape 330, on initialise le compteur de groupes, soit $k = 1$, puis on entre dans une boucle d'itération.

A l'étape 340, on compare, pour le groupe $G_k$, le taux binaire $R_k$ de consigne, donné par le schéma $MCS(k)$, avec l'information mutuelle instantanée $I_{inst}(k)$ relative à ce même groupe. L'information mutuelle instantanée est évaluée à l'aide d'une des expressions (7), (9-1) ou (10) dans lesquelles les sommations portent sur l'ensemble des sous-porteuses du groupe considéré.

Les étapes 343 et 345, en fonction du résultat de la comparaison, sont similaires aux étapes 243 et 245 précitées.

En 350, on vérifie si l'on a épuisé l'ensemble des groupes, à savoir si $k = K/N_{SB}$. Dans l'affirmative on passe à l'étape 360, sinon l'on incrémente $k$ en 355 et l'on retourne à l'étape 340.

A l'étape 360, on signale la situation de coupure pour les groupes de ressources en cet état et l'on transmet un indicateur de qualité de canal pour les autres groupes. L'utilisation des méthodes exhaustive et abrégées ne sera pas répétée ici. On notera simplement que l'indicateur de qualité de canal possède $K/N_{SB}$ composantes associées aux différents groupes. Si la méthode de signalisation exhaustive les transmet toutes, la première méthode de signalisation abrégée ne transmet individuellement que les $M$ composantes les plus élevées, les $K/N_{SB} - M - M_0$ composantes restantes étant transmises sous forme de moyenne. Les identifiants des $M_0$ groupes en état de coupure sont également transmis à l'émetteur.

On comprendra que la variante représentée à la Fig. 2B peut également s'appliquer au second mode de réalisation, seule la détermination conjointe portant ici sur chaque groupe de ressources $G_k$ au lieu de chaque ressource $PRB_k$.

Si le système de télécommunication est de type HARQ, il est possible de réduire le trafic inutile selon la voie descendante grâce à la présente invention. En effet, si l'on interdit toute transmission sur la ressource ou le groupe de ressources en état de coupure pendant une durée prédéterminée supérieure ou égale au temps de cohérence du canal, noté $T_{coh}$, on évitera des transmissions ou des retransmissions de paquet qui seraient immanquablement condamnées à l'échec. On réduit ainsi considérablement le taux de retransmission et le débit moyen des utilisateurs (*throughput*) peut être corrélativement plus élevé.

On rappelle que le temps de cohérence du canal $T_{coh}$, peut être obtenu de différentes manières. Par exemple, il peut être estimé à partir du décalage Doppler $f_d$ subi par le signal radio au moyen de :

$$T_{coh} = \frac{1}{\pi\sqrt{2}f_d} \qquad\qquad (15)$$

Le décalage Doppler pourra être obtenu comme indiqué dans l'article de N. Maeda et al. intitulé « Experimental Evaluation of Throughput Performance in Packet Wireless Access Based on VSF-OFDM and VSF-CDMA », IEEE PIRMC '03, c'est-à-dire à partir d'une corrélation entre symboles pilotes d'une même porteuse appartenant à des symboles OFDM successifs. Alternativement, le temps de cohérence pourra être obtenu à partir de la fonction de corrélation cyclique du signal OFDM reçu sur le canal de transmission (voie montante ou descendante). Dans le cas où le canal de transmission est de type FDD (*Frequency Division Duplex*) c'est-à-dire si la voie montante et la voie descendante utilisent des fréquences porteuses différentes, on déduira simplement le décalage Doppler de l'une par rapport au décalage Doppler de l'autre.

Selon une variante, l'interdiction de transmission durera un temps supérieur ou égal à la période d'ordonnancement de l'émetteur, c'est-à-dire la période avec laquelle il peut réallouer les ressources de transmission à l'utilisateur.

Enfin, au lieu d'interdire à l'émetteur d'utiliser une ressource en situation de coupure, on pourra adopter pour la transmission ou la retransmission d'un paquet un schéma de modulation et de codage plus robuste au prix d'une perte d'efficacité spectrale.

La présente invention a été notamment décrite dans le cas particulier d'un canal OFDM de type SISO *(Single Input Single Output)*. On comprendra qu'elle s'applique également à un système MIMO (*Multiple Input Multiple Output*). Dans ce cas, les coefficients d'atténuation $h_{ij}$ sont à remplacer par des matrices $H_j$ de taille $P \times Q$ où $P$ et $Q$ sont respectivement le nombre d'antennes de l'émetteur et le nombre d'antennes du récepteur. Le canal de l'utilisateur dispose alors de ressources spatiales qui peuvent être combinées aux ressources fréquentielles, temporelles ou de codes d'accès. Ainsi, certaines ressources associées à un canal élémentaire entre une antenne d'émission et une antenne de réception pourront être en situation de coupure alors que d'autres associées à un autre canal élémentaire pourront ne pas l'être. On comprendra, par exemple, qu'un groupe de sous-porteuses pourra être en situation de coupure pour un canal élémentaire et ne pas l'être pour un autre.

## Revendications

**1.** Méthode de signalisation de la qualité de canal d'un utilisateur dans un système de télécommunication OFDM sans fil à adaptation de liaison, ledit canal étant non ergodique et à évanouissements par blocs, le système disposant d'une pluralité ($K/N_{SB}$) de groupes de ressources de transmission, les ressources de transmission étant des intervalles de fréquences du multiplex OFDM, chaque groupe ($G_k$) comprenant au moins une ressource de transmission ($PRB_k$), effectuant les étapes suivantes :

- on détermine (110) pour chaque groupe de ressources, si celui-ci serait en situation de coupure pour un débit binaire requis par l'utilisateur, dit débit binaire de consigne ($R_k$) ; et
- on transmet sur la liaison montante de l'utilisateur, une liste d'identifiants des groupes de ressources qui seraient en situation de coupure (120) ainsi qu'un indicateur de qualité de canal pour les groupes de ressources qui n'y seraient pas (130).

**caractérisée en ce qu'**un groupe est considéré en situation de coupure si l'information mutuelle instantanée ($I_{inst}(k)$) sur ce groupe de ressources est inférieure audit débit binaire de consigne, l'information mutuelle instantanée étant calculée comme une moyenne de l'information mutuelle prise sur l'ensemble des sous-porteuses dudit groupe et sur l'ensemble des temps-symboles d'un bloc

**2.** Méthode de signalisation selon la revendication 1, **caractérisée en ce que** le débit binaire de consigne pour un groupe de ressources est lui-même déduit d'un schéma de modulation et de codage apte à satisfaire un taux d'erreur paquet de consigne (**$PER_{tg}$**) en présence du rapport signal sur interférence plus bruit estimé pour ce groupe de ressources.

**3.** Méthode de signalisation selon la revendication 1, **caractérisée en ce que** le débit binaire de consigne pour un groupe de ressources est lui-même déduit d'un schéma de modulation et de codage, ledit schéma et le rapport signal sur interférence plus bruit étant déterminés conjointement de manière à satisfaire un taux d'erreur paquet de consigne (**PER$_{tg}$**).

4. Méthode de signalisation selon l'une des revendications précédentes, **caractérisée en ce que** l'on détermine le temps de cohérence du canal, et que la liste des identifiants des groupes de ressources en situation de coupure est transmise sur la voie montante avec une période supérieure ou égale au dit temps de cohérence.

5. Méthode de signalisation selon la revendication 1, **caractérisée en ce que** l'on estime le rapport signal sur interférence plus bruit pour chaque groupe de ressources, et que l'indicateur de qualité de canal comprend des valeurs quantifiées des rapports signal sur interférence plus bruit relatifs aux groupes de ressources qui ne sont pas en situation de coupure.

6. Méthode de signalisation selon la revendication 1, **caractérisée en ce que** l'on estime le rapport signal sur interférence plus bruit pour chaque groupe de ressources, que l'on effectue une quantification desdits rapports, et que les rapports quantifiés relatifs aux groupes de ressources n'étant pas en situation de coupure sont classés en fonction de leurs valeurs, l'indicateur de qualité de canal comprenant un nombre prédéterminé des rapports quantifiés ayant les valeurs les plus élevées ainsi qu'une moyenne des valeurs restantes.

7. Méthode de signalisation selon la revendication 1, **caractérisée en ce que** l'on estime le rapport signal sur interférence plus bruit pour chaque groupe de ressources, que l'on effectue une quantification desdits rapports, et que les rapports quantifiés relatifs aux groupes de ressources n'étant pas en situation de coupure sont classés en fonction de leurs valeurs, l'indicateur de qualité de canal comprenant une première moyenne calculée sur un nombre prédéterminé des valeurs les plus élevées et une seconde moyenne calculée sur les valeurs restantes.

8. Méthode de signalisation selon la revendication 1, **caractérisée en ce que** l'on estime le rapport signal sur interférence plus bruit pour chaque groupe de ressources, que l'on effectue une quantification desdits rapports, et que les rapports quantifiés relatifs aux groupes de ressources n'étant pas en situation de coupure sont classés en fonction de leurs valeurs, que l'on calcule une première moyenne sur les valeurs comprises dans un intervalle dont la borne supérieure est la valeur la plus élevée et la borne inférieure est cette même valeur moins une marge prédéterminée, que l'on calcule une seconde moyenne sur les valeurs restantes, l'indicateur de qualité de canal comprenant lesdites première et seconde moyennes.

9. Méthode de signalisation selon l'une des revendications précédentes, **caractérisée en ce que** lorsque l'émetteur sur ledit canal reçoit via la liaison montante de l'utilisateur les identifiants des groupes de ressources en situation de coupure, il ne transmet pas sur ces groupes de ressources pendant un temps supérieur ou égal au temps de cohérence du canal.

10. Méthode de signalisation selon l'une des revendications 1 à 8, **caractérisée en ce que** lorsque l'émetteur sur ledit canal reçoit via la liaison montante de l'utilisateur les identifiants de groupes de ressources en situation de coupure, il ne transmet pas sur ces ressources pendant un temps supérieur ou égal à une période d'ordonnancement des ressources du système.

**Patentansprüche**

1. Verfahren zum Signalisieren der Kanalqualität eines Benutzers in einem drahtlosen OFDM-Telekommunikationssystem mit Verbindungsanpassung, wobei der Kanal nicht-ergodisch ist und einen Blockschwund aufweist, wobei das System über eine Mehrzahl ($K/N_{SB}$) von Gruppen von Übertragungsressourcen verfügt, wobei die Übertragungsressourcen Frequenzintervalle des OFDM-Multiplex sind, wobei jede Gruppe ($G_k$) wenigstens eine Übertragungsressource ($PRB_k$) umfasst, wobei das Verfahren die folgenden Schritte ausführt:

- man bestimmt (110) für jede Gruppe von Ressourcen, ob diese für eine vom Benutzer angeforderte binäre Rate, genannt binäre Sollrate ($R_k$), in einer Unterbrechungssituation wäre; und
- man überträgt auf der Aufwärtsverbindung des Benutzers eine Liste von Identifikatoren der Gruppen von Ressourcen, die in einer Unterbrechungssituation wären (120), sowie einen Kanalqualitätsindikator für die Gruppen von Ressourcen, die es nicht wären (130),

**dadurch gekennzeichnet, dass** eine Gruppe als in einer Unterbrechungssituation befindlich betrachtet wird, wenn die instantane gegenseitige Information ($I_{inst}(k)$) auf dieser Gruppe von Ressourcen kleiner ist als die binäre Sollrate, wobei die instantane gegenseitige Information berechnet wird als ein Mittelwert der gegenseitigen Information über die Gesamtheit von Unterträgern der Gruppe und über die Gesamtheit von Zeit-Symbolen eines Blocks.

2. Verfahren zum Signalisieren nach Anspruch 1, **dadurch gekennzeichnet, dass** die binäre Sollrate für eine Gruppe von Ressourcen selbst wiederum aus einem Modulations- und Codierschema abgeleitet wird, das dazu ausgelegt ist, einer Sollpaketfehlerrate ($PER_{tg}$) zu genügen in Anwesendheit des Verhältnisses von Signal zu Interferenz plus Rauschen, geschätzt für diese Gruppe von Ressourcen.

3. Verfahren zum Signalisieren nach Anspruch 1, **dadurch gekennzeichnet, dass** die binäre Sollrate für eine Gruppe von Ressourcen selbst wiederum aus einem Modulations- und Codierschema abgeleitet wird, wobei das Schema und das Verhältnis von Signal zu Interferenz plus Rauschen gemeinsam derart bestimmt werden, dass sie einer Sollpaketfehlerrate ($PER_{tg}$) genügen.

4. Verfahren zum Signalisieren nach einem der vorhergehenden Ansprüche, **dadurch gekennzeichnet, dass** man die Kohärenzzeit des Kanals bestimmt, und dass die Liste der Identifikatoren der Gruppen von Ressourcen in einer Unterbrechungssituation auf dem Aufwärtsweg mit einer Periode größer oder gleich der Kohärenzzeit übertragen wird.

5. Verfahren zum Signalisieren nach Anspruch 1, **dadurch gekennzeichnet, dass** man das Verhältnis von Signal zu Interferenz plus Rauschen für jede Gruppe von Ressourcen abschätzt, und dass der Kanalqualitätsindikator quantisierte Werte der Verhältnisse von Signal zu Interferenz plus Rauschen bezüglich der Gruppen von Ressourcen umfasst, die sich nicht in einer Unterbrechungssituation befinden.

6. Verfahren zum Signalisieren nach Anspruch 1, **dadurch gekennzeichnet, dass** man das Verhältnis von Signal zu Interferenz plus Rauschen für jede Gruppe von Ressourcen abschätzt, dass man eine Quantisierung der Verhältnisse durchführt, und dass die quantisierten Verhältnisse bezüglich der Gruppen von Ressourcen, die sich nicht in einer Unterbrechungssituation befinden, als Funktion ihrer Werte klassifiziert werden, wobei der Kanalqualitätsindikator eine vorbestimmte Zahl von quantisierten Verhältnissen umfasst, die die größten Werte haben, sowie einen Mittelwert, der verbleibenden Werte.

7. Verfahren zum Signalisieren nach Anspruch 1, **dadurch gekennzeichnet, dass** man das Verhältnis von Signal zu Interferenz plus Rauschen für jede Gruppe von Ressourcen abschätzt, dass man eine Quantisierung der Verhältnisse durchführt, und dass die quantisierten Verhältnisse bezüglich der Gruppen von Ressourcen, die sich nicht in einer Unterbrechungssituation befinden, als Funktion ihrer Werte klassifiziert werden, wobei der Kanalqualitätsindikator einen ersten Mittelwert umfasst, berechnet über eine vorbestimmte Zahl von größten Werten, sowie einen zweiten Mittelwert, berechnet über die verbleibenden Werte.

8. Verfahren zum Signalisieren nach Anspruch 1, **dadurch gekennzeichnet, dass** man das Verhältnis von Signal zu Interferenz plus Rauschen für jede Gruppe von Ressourcen abschätzt, dass man eine Quantisierung der Verhältnisse durchführt, und dass die quantisierten Verhältnisse bezüglich der Gruppen von Ressourcen, die sich nicht in einer Unterbrechungssituation befinden, als Funktion ihrer Werte klassifiziert werden, dass man einen ersten Mittelwert über die Werte berechnet, die in einem Intervall enthalten sind, dessen obere Grenze der größte Wert ist und dessen untere Grenze dieser gleiche Wert minus eine vorbestimmte Marge ist, dass man einen zweiten Mittelwert über die verbleibenden Werte berechnet, wobei der Kanalqualitätsindikator den ersten und den zweiten Mittelwert umfasst.

9. Verfahren zum Signalisieren nach einem der vorhergehenden Ansprüche, **dadurch gekennzeichnet, dass** dann, wenn der Sender auf dem Kanal über die Aufwärtsverbindung des Benutzers die Identifikatoren der Gruppen von Ressourcen in einer Unterbrechungssituation empfängt, er auf diesen Gruppen von Ressourcen während einer Zeit größer oder gleich der Kohärenzzeit des Kanals nicht überträgt.

10. Verfahren zum Signalisieren nach einem der Ansprüche 1 bis 8, **dadurch gekennzeichnet, dass** dann, wenn der Sender auf dem Kanal über die Aufwärtsverbindung des Benutzers die Identifikatoren von Gruppen von Ressourcen in einer Unterbrechungssituation empfängt, er auf diesen Ressourcen während einer Zeit größer oder gleich einer Reihungsperiode der Systemressourcen nicht überträgt.

**Claims**

1.  A method for reporting the user channel quality in a link adaptation wireless OFDM telecommunication system, said channel being not ergodic and of the block fading type, the system having a plurality ($K/N_{SB}$) of groups of transmission resources, said transmission resources being frequency intervals of the OFDM multiplex, each group ($G_k$) including at least one transmission resource ($PRB_k$), said method comprising the following steps:

    - for each group of resources, it is determined (110) whether it would be in an outage position for a bit rate required by the user, referred to as set point bit rate ($R_k$); and
    - a list of identifiers of the groups of resources which would be in an outage position (120) as well as a channel quality indicator for the groups of resources which would not be (130) are transmitted on the uplink of the user,

    **characterized in that** a group is considered in an outage position if the instantaneous mutual information ($I_{inst}(k)$) on this group of resources is lower than said set point bit rate, said instantaneous mutual information being calculated as an average of the mutual information, over the set of subcarriers of said group and over the set of time symbols of a block.

2.  The reporting method according to claim 1, **characterized in that** the set point bit rate for a group of resources is in turn deduced from a modulation and coding scheme able to meet a set point packet error rate ($PER_{tg}$) in the presence of the signal to interference plus noise ratio estimated for this group of resources.

3.  The reporting method according to claim 1, **characterized in that** the set point bit rate for a group of resources is in turn deduced from a modulation and coding scheme, said scheme and said signal to interference plus noise ratio being determined together so as to meet a set point packet error rate ($PER_{tg}$).

4.  The reporting method according to any preceding claims, **characterized in that** a coherence time of the channel is determined, and **in that** the list of identifiers of the groups of resources in an outage position is transmitted on the uplink with a period of time equal to or higher than said coherence time.

5.  The reporting method according to claim 1, **characterized in that** the signal to interference plus noise ratio is assessed for each group of resources, and **in that** the channel quality indicator comprises quantized values of the signal to interference plus noise ratios relating to the groups of resources which are not in an outage position.

6.  The reporting method according to claim 1, **characterized in that** the signal to interference plus noise ratio is assessed for each group of resources, **in that** said ratios are quantized, and **in that** the quantized ratios relating to the groups of resources not being in an outage position are classified depending on their values, the channel quality indicator comprising a predetermined number of quantized ratios having the highest values as well as an average of the remaining values.

7.  The reporting method according to claim 1, **characterized in that** the signal to interference plus noise ratio is assessed for each group of resources, **in that** said ratios are quantized, and **in that** the quantized ratios relating to the groups of resources not being in an outage position are classified depending on their values, the channel quality indicator comprising a first average calculated on a predetermined number of the highest values and a second average calculated on the remaining values.

8.  The reporting method according to claim 1, **characterized in that** the signal to interference plus noise ratio is assessed for each group of resources, said ratios are quantized, and the quantized ratios relating to the groups of resources not being in an outage position are classified depending on their values, **in that** a first average is calculated on values included in an interval the upper bound of which is the highest value and the lower bound of which is the same value minus a predetermined margin, **in that** a second average is calculated on the remaining values, the channel quality indicator including said first and second averages.

9.  The reporting method according to any preceding claims, **characterized in that** when the transmitter on said channel receives via the user uplink the identifiers of the groups of resources in an outage position, it does not transmit of these groups or resources during a time equal to or higher than a coherence time of the channel.

10. The reporting method according to one of claims 1 to 8, **characterized in that** when the transmitter on said channel receives via the user uplink the identifiers of the groups of resources in an outage position, it does not transmit on these resources during a time equal to or higher than a scheduling period of time for the system resources.

$$PRB_k, k = 1, .., K$$

$$R_k > I_{inst}(k)?$$

110

ressource $PRB_k$ en situation de coupure
$\Rightarrow$ transmission identifiant($PRB_k$)

120

transmission de l'indicateur de qualité $CQI$
pour les ressources $PRB_k$ n'étant pas en
situation de coupure

130

**<u>Fig. 1</u>**

estimation de $SINR(k)$
pour $PRB_k, k = 1, .., K$ ⟩ 210

↓

détermination $MCS(k)$ en fonction de:
$PER_{tg}, SINR(k)$ ⟩ 220

↓

$k = 1$ ⟩ 230

↓

240

$R_k > I_{inst}(k)?$ —— Y → $PRB_k$ en coupure
$CQI(k) = 0$ ⟩ 243

↓ N

245

$PRB_k$ pas en coupure
calcul de $CQI(k)$
en fonction de $SINR(k)$

↓

255

$k = k + 1$ ← N —— $k = K?$ ⟩ 250

↓ Y

260

envoi rapport sur UL

**Fig. 2A**

pour $PRB_k$, $k = 1,.., K$
détermination conjointe de $SINR(k)$
et $MCS(k)$ — 215

$k = 1$ — 230

$R_k > I_{inst}(k)$? — 240

Y

$PRB_k$ en coupure
$CQI(k) = 0$ — 243

N

$PRB_k$ pas en coupure
calcul de $CQI(k)$
en fonction de $SINR(k)$ — 245

255

$k = k + 1$

N

$k = K$? — 250

Y

envoi rapport sur UL — 260

**Fig. 2B**

**Fig. 2C**

**Fig. 3**

**EP 2 401 830 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2008109269 A
- EP 1906577 A
- EP 1901573 A

### Littérature non-brevet citée dans la description

- Performance evaluation of some hybrid ARQ schemes in IEEE 802.11a networks. **E. CALVANESE STRINATI et al.** Proceedings of the IEEE Vehicular Technology Conference. Spring, Avril 2003, vol. 4, 2735-2739
- **N. KOLEHMAINEN et al.** Channel quality indication reporting schemes for UTRAN long term evolution downlink. *Proceedings of IEEE VTC Spring 2008,* Mai 2008, 2522-2526
- **NAWEI.** *Mitigating signaling requirements for MIMO with Frequency Domain Packet Scheduling,* 2007
- **E. BIGLIERI et al.** Fading channels : information-theoretic and communication aspects. *IEEE Trans. on Information Theory,* Octobre 1998, vol. 44 (6), 2619-2692
- Feasability study for OFDM for UTRAN enhancement. *3GPP TSG-RAN-1, TR 25.892,* Mars 2004
- **N. MAEDA et al.** Experimental Evaluation of Throughput Performance in Packet Wireless Access Based on VSF-OFDM and VSF-CDMA. *IEEE PIRMC '03*